# FASCICULE DE BREVET EUROPEEN

(11) **EP 1 300 613 B1**
(45) Date de publication et mention de la délivrance du brevet: **30.11.2005**
(21) Numéro de dépôt: 02292243.9
(22) Date de dépôt: 12.09.2002
(51) Int. Cl.: F16H 61/24, F16H 63/20, F16H 63/34, F16H 61/28

(54) **Dispositif de commande de boîte de vitesses à sélection par rotation d'un arbre de commande**
Getriebesteuerungsvorrichtung mit Drehbetätigung der Schaltwelle
Transmission control device with rotational control shaft selection

(30) Priorité: 04.10.2001 FR 0112762
(43) Date de publication de la demande: 09.04.2003
(73) Titulaire: Peugeot Citroen Automobiles SA, 92200 Neuilly sur Seine (FR)
(72) Inventeur: Delporte, Stéphane, 91190 St Aubin (FR)
(74) Mandataire: Thinat, Michel

(56) Documents cités:
- EP-A- 0 598 708
- WO-A-99/57463
- US-A- 5 083 475

## Description

La présente invention concerne, de façon générale, le domaine des systèmes de transmission de puissance pour véhicules automobiles, en particulier les dispositifs de commande des boîtes de vitesses.

Un tel dispositif de commande d'une boîte de vitesses correspondant au préambule de la revendication 1, est revelé dans WO-A-9957463.

Plus précisément, la présente invention concerne un dispositif de commande d'une boîte de vitesses susceptible d'offrir plusieurs rapports de vitesses incluant une marche arrière, ce dispositif comprenant un arbre de commande allongé suivant un axe longitudinal, au moins un premier organe menant porté par l'arbre de commande, une pluralité d'axes de fourchettes, et une pluralité d'organes menés dont chacun est porté par un axe de fourchette, les axes de fourchettes s'étendant parallèlement les uns aux autres, et l'arbre de commande étant mobile en translation entre au moins deux positions axiales, le long de l'axe longitudinal, suivant des première et seconde directions opposées, et mobile en rotation autour de l'axe longitudinal, dans des premier et second sens opposés, au moins entre une position angulaire de repos et une première position angulaire extrême, et le premier organe menant coopérant sélectivement avec un organe mené, sélectionné dans la pluralité d'organes menés, pour lier cinématiquement à l'arbre de commande l'organe mené sélectionné et l'axe de fourchette qui le porte.

Bien que les boîtes de vitesses de ce type soient connues et utilisées depuis longtemps, elles continuent de faire l'objet de développements visant notamment à en augmenter la compacité et à en rendre la commande automatique ou automatisable.

L'invention s'inscrit précisément dans cette démarche et a pour but de proposer un dispositif de commande de boîte de vitesses conçu pour répondre à ce besoin.

A cette fin, le dispositif de commande de l'invention, par ailleurs conforme à la définition générique qu'en donne le préambule ci-dessus, est essentiellement caractérisé en ce que chacun des axes de fourchettes s'étend suivant une génératrice d'un cylindre de révolution axé sur l'axe longitudinal de l'arbre de commande, et en ce que l'organe mené sélectionné est cinématiquement assujetti au premier organe menant au moins par rotation de l'arbre de commande autour de l'axe longitudinal, et sélectivement entraîné en translation le long de l'axe longitudinal par translation de l'arbre de commande.

Il est par exemple possible de prévoir que ce dispositif de commande comprenne au moins un premier organe de guidage portant une première came à rampe et monté radialement mobile par rapport à l'axe longitudinal entre une position rapprochée et une position éloignée de l'arbre de commande, que l'arbre de commande comporte au moins un premier pion radial respectivement en contact et sans contact avec le premier organe de guidage pour les positions rapprochée et éloignée de ce dernier, et que l'arbre de commande soit sélectivement entraîné en rotation dans le premier sens autour de l'axe longitudinal, de sa position angulaire de repos jusque dans une première position angulaire décalée vers sa première position angulaire extrême, par entraînement de cet arbre en translation suivant la première direction le long de cet axe longitudinal, et par guidage du premier pion radial sur la rampe de la première came, en position rapprochée du premier organe de guidage.

Ce dispositif de commande comprend avantageusement un ressort sollicitant l'arbre de commande en rotation dans le second sens de rotation autour de l'axe longitudinal, l'arbre de commande portant une butée, et la position angulaire de repos de l'arbre de commande étant déterminée par un contact mutuel de la butée portée par l'arbre de commande et d'un organe d'indexage.

De préférence, le premier organe de guidage comprend, en plus de la première came à rampe, une première glissière espacée de la première came et la recouvrant de façon au moins partielle et sélective, et la première glissière est montée basculante par rapport à la première came pour permettre au premier pion radial d'échapper à la rampe de la première came pour une translation de l'arbre de commande suivant la première direction, et pour offrir au premier pion radial un appui de guidage pour une translation de l'arbre de commande suivant la seconde direction.

Pour permettre la commande d'un boîte de vitesses à plus de quatre rapports, il est possible de prévoir que le dispositif de commande de l'invention comprenne au moins un deuxième organe de guidage portant une deuxième came à rampe et monté radialement mobile par rapport à l'axe longitudinal entre une position rapprochée et une position éloignée de l'arbre de commande, que l'arbre de commande comporte au moins un deuxième pion radial respectivement en contact et sans contact avec le deuxième organe de guidage pour les positions rapprochée et éloignée de ce dernier, et que l'arbre de commande soit sélectivement entraîné en rotation dans le premier sens autour de l'axe longitudinal, de sa première position angulaire décalée jusque dans une deuxième position angulaire décalée, par entraînement de cet arbre en translation suivant la première direction le long de cet axe longitudinal, et par guidage du deuxième pion radial sur la rampe de la deuxième came, en position rapprochée du deuxième organe de guidage.

Comme le premier organe de guidage, le deuxième organe de guidage comprend de préférence, en plus de la deuxième came à rampe, une deuxième glissière espacée de la deuxième came et la recouvrant de façon au moins partielle et sélective, et la deuxième glissière est montée basculante par rapport à la deuxième came pour permettre au deuxième pion radial d'échapper à la rampe de la deuxième came pour une translation de l'arbre de commande suivant la première direction, et pour offrir au deuxième pion radial un appui de guidage pour une translation de l'arbre de commande suivant la seconde direction.

Le dispositif de commande comprend utilement un carter fixe par rapport à l'axe longitudinal et dans lequel sont logés l'arbre de commande et les axes de fourchettes, ce carter pouvant constituer une enveloppe pour la boîte de vitesses elle-même, ou former un carter séparé.

L'organe d'indexage peut avantageusement être mobile suivant une direction transversale par rapport à l'axe longitudinal de manière que l'arbre de commande puisse être sélectivement déplacé, par l'organe d'indexage agissant sur la butée, entre sa position angulaire de repos et une seconde position angulaire extrême séparée de la première position angulaire extrême par la position angulaire de repos.

Dans ce cas, l'arbre de commande peut porter un second organe menant coopérant, dans la seconde position angulaire extrême de cet arbre, avec un organe mené d'un axe de fourchette commandant la marche arrière.

Le dispositif de commande de l'invention peut ainsi comprendre au moins un actionneur commandé, tel qu'un électro-aimant, monté sur le carter et imprimant sélectivement à l'un des organes mobiles du dispositif un mouvement de va-et-vient transversalement à l'axe longitudinal.

Enfin, l'arbre de commande peut être au moins partiellement constitué par un piston d'un vérin hydraulique.

D'autres caractéristiques et avantages de l'invention ressortiront clairement de la description qui en est faite ci-après, à titre indicatif et nullement limitatif, en référence aux dessins annexés, dans lesquels :

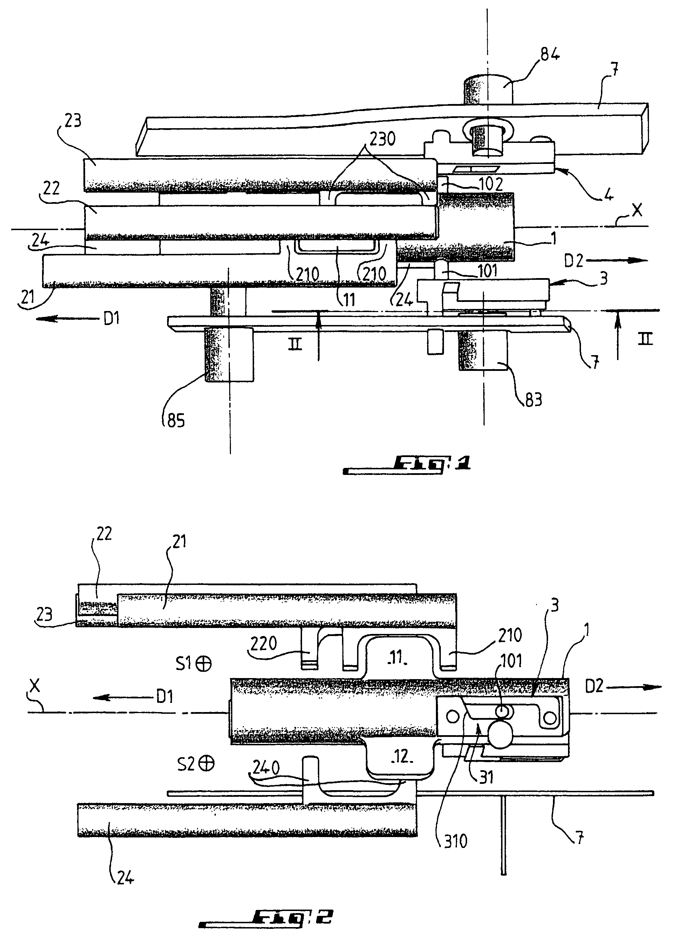

- la figure 1 est une vue de dessus d'un dispositif de commande selon l'invention, représenté dans un état dans lequel l'arbre de commande occupe sa position angulaire de repos et sa première position axiale active, avancée dans le sens de la première direction axiale D1 par rapport à une position neutre, l'arbre de commande ayant entraîné avec lui un premier axe de fourchette suivant cette première direction D1;

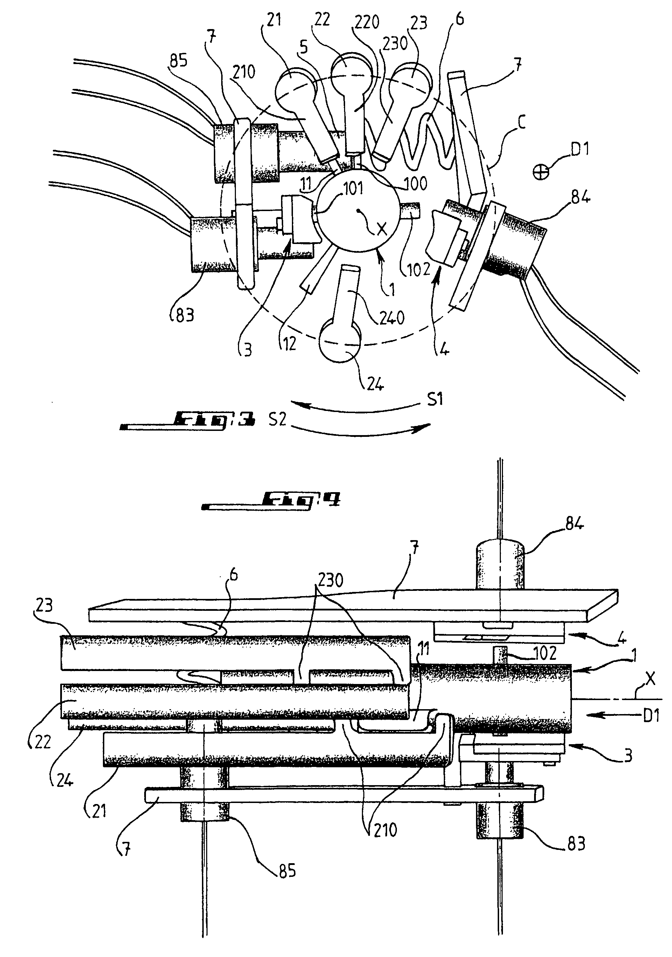

- la figure 2 est une vue de côté du dispositif de commande illustré à la figure 1, observé suivant l'incidence définie par les flèches II-II de la figure 1 et représenté dans un état dans lequel l'arbre de commande occupe sa position angulaire de repos et sa deuxième position axiale active, reculée dans le sens de la deuxième direction axiale D2 par rapport à sa position neutre, l'arbre de commande ayant entraîné avec lui le premier axe de fourchette suivant cette deuxième direction D2;
- la figure 3 est une vue en bout du dispositif de commande illustré à la figure 1, observé suivant la direction axiale D1 et représenté dans un état dans lequel l'arbre de commande occupe sa position angulaire de repos et sa deuxième position axiale active, et dans lequel le premier organe de guidage occupe sa position rapprochée de l'arbre de commande, alors que le second organe de guidage occupe sa position éloignée;

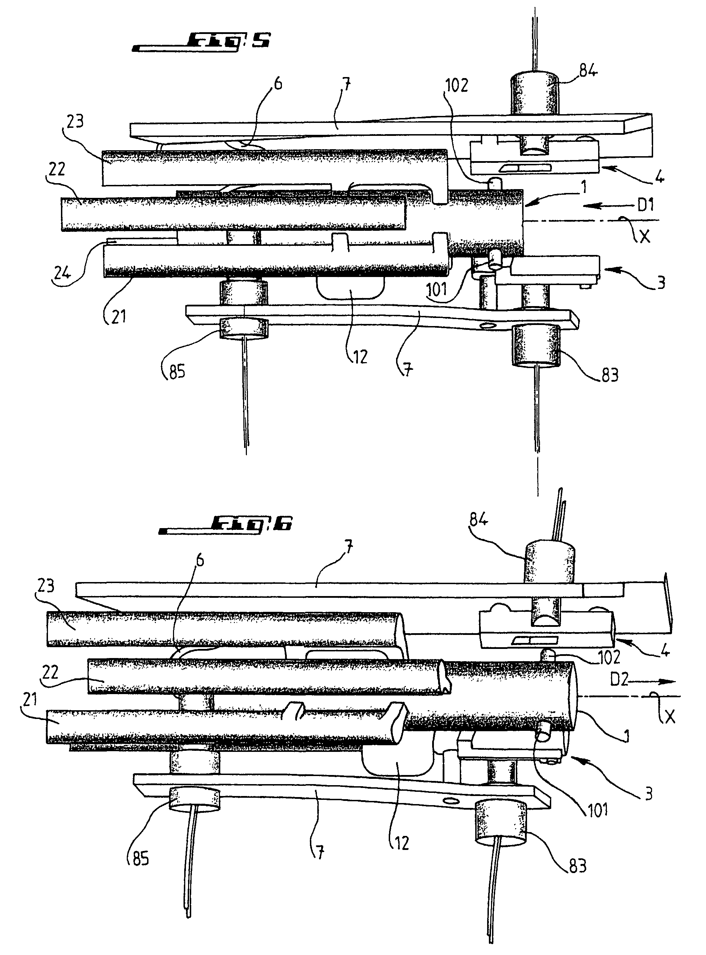

- la figure 4 est une vue de dessus du dispositif de commande illustré à la figure 1, représenté dans le même état que sur la figure 3;
- la figure 5 est une vue de dessus du dispositif de commande illustré à la figure 1, représenté dans un état dans lequel l'arbre de commande occupe sa première position angulaire décalée et sa première position axiale active, ayant entraîné avec lui un deuxième axe de fourchette suivant la première direction axiale D1, le premier organe de guidage occupant sa position rapprochée de l'arbre de commande et le second organe de guidage sa position éloignée;

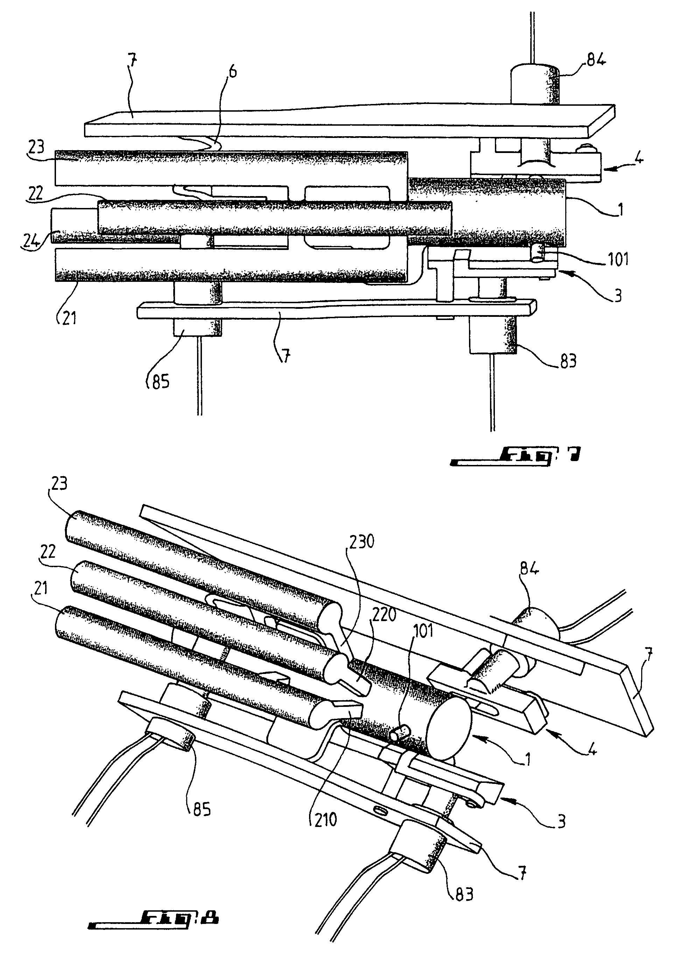

- la figure 6 est une vue de dessus avec perspective du dispositif de commande illustré à la figure 1, représenté dans un état dans lequel l'arbre de commande occupe sa première position angulaire décalée et sa deuxième position axiale active, ayant entraîné avec lui le deuxième axe de fourchette suivant la deuxième direction axiale D2, le premier organe de guidage occupant sa position rapprochée de l'arbre de commande et le second organe de guidage sa position éloignée;
- la figure 7 est une vue de dessus du dispositif de commande illustré à la figure 1, représenté dans un état dans lequel l'arbre de commande occupe les mêmes positions angulaire et axiale que sur la figure 6, les premier et second organes de guidage occupant en revanche tous deux leur position rapprochée de l'arbre de commande;
- la figure 8 est une vue de dessus et en perspective du dispositif de commande illustré à la figure 1, représenté dans un état dans lequel l'arbre de commande occupe sa première position axiale active et sa deuxième position angulaire décalée, qui constitue en l'occurrence sa première position angulaire extrême, l'arbre de commande ayant entraîné avec lui un troisième axe de fourchette suivant la première direction axiale D1, et les premier et second organes de guidage occupant leur position rapprochée de l'arbre de commande;

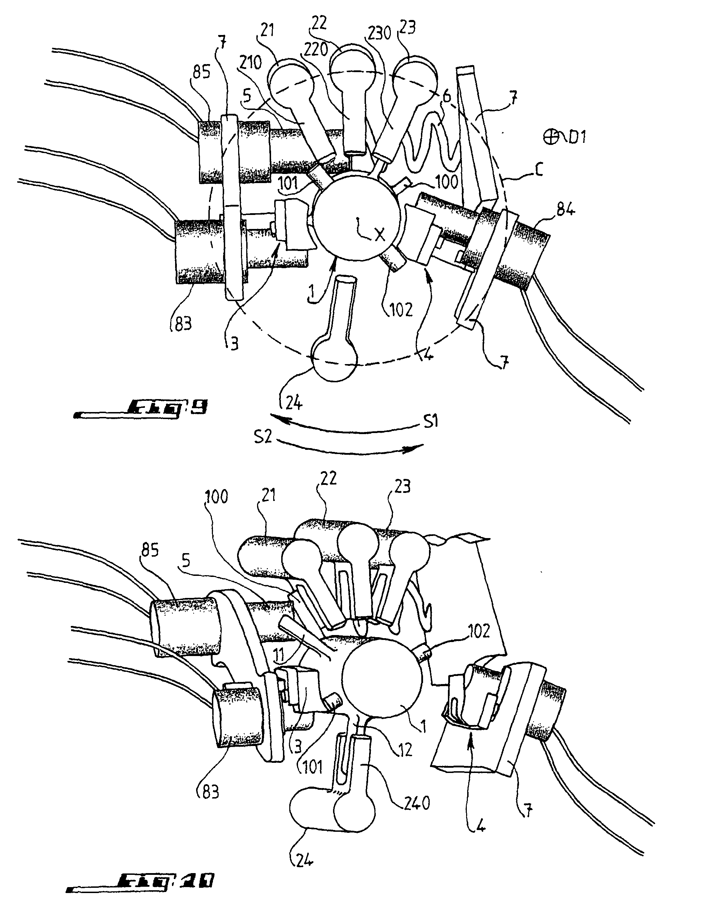

- la figure 9 est une vue en bout dispositif de commande illustré à la figure 1, représenté dans le même état que sur la figure 8, et observé suivant la direction D1;
- la figure 10 est une vue en bout et en perspective du dispositif de commande illustré à la figure 1, représenté dans un état dans lequel l'arbre de commande occupe sa deuxième position angulaire extrême, les premier et second organes de guidage occupant leur position éloignée de l'arbre de commande;

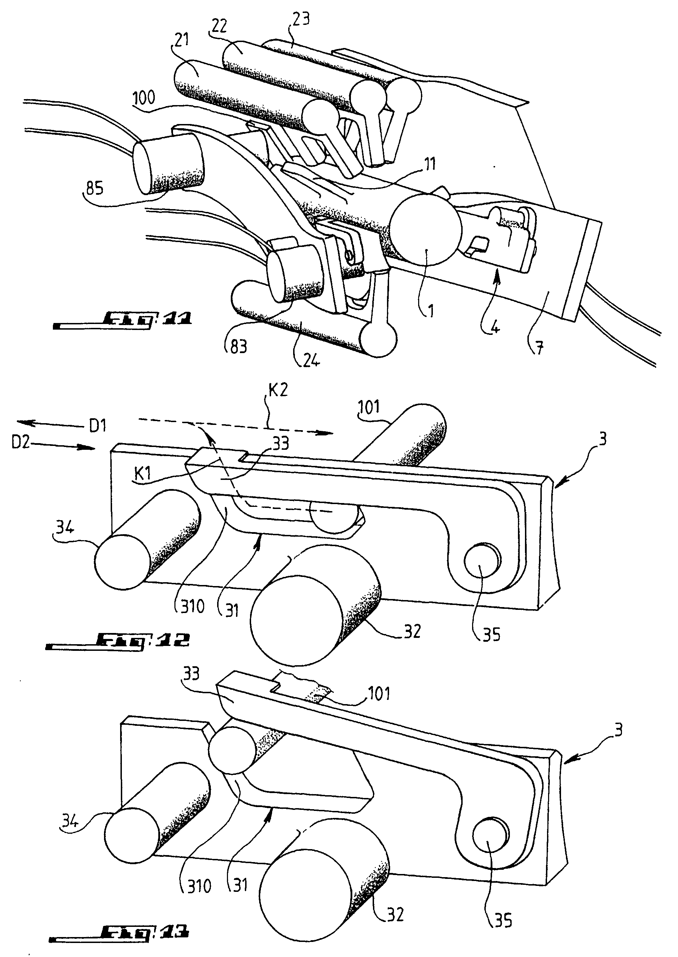

- la figure 11 est une vue en perspective semblable à la figure 10, prise suivant une incidence différente;
- la figure 12 est une vue en perspective agrandie du premier organe de guidage représenté en position rapprochée et dans la deuxième position axiale de l'arbre de commande; et
- la figure 13 est une vue en perspective agrandie du premier organe de guidage représenté en position rapprochée et dans une position axiale de l'arbre de commande intermédiaire entre les deuxième et première positions axiales.

L'invention concerne de façon générale les boîtes de vitesses susceptibles d'offrir plusieurs rapports de vitesses incluant une marche arrière, et plus précisément les dispositifs de commande de telles boîtes de vitesses.

De façon traditionnelle, un dispositif de commande de ce type comprend un arbre de commande 1, un ou plusieurs organes menants tels que 11 et 12, une pluralité d'axes de fourchettes tels que 21 à 24, et une pluralité d'organes menés tels que 210 à 240.

L'arbre de commande 1 est allongé suivant un axe longitudinal X, mobile en translation, le long de cet axe X, suivant deux directions D1 et D2 mutuellement opposées, et porte chacun des organes menants 11 et 12.

Par ailleurs, l'arbre de commande 1 est mobile en rotation autour de l'axe longitudinal X, dans deux sens opposés S1 et S2, de manière à pouvoir au moins occuper une position angulaire de repos et une première position angulaire extrême

Les axes de fourchettes 21 à 24 s'étendent parallèlement les uns aux autres, et chacun des organes menés 210, 220, 230, et 240 est porté par un axe de fourchette.

Le premier organe menant 11 est destiné à coopérer avec un organe mené, sélectionné parmi les organes menés des axes de fourchettes 21 à 23, pour lier cinématiquement, à l'arbre de commande 1, l'organe mené sélectionné et l'axe de fourchette qui le porte, la sélection d'un des organes menés étant opérée par déplacement de l'arbre de commande 1.

Selon l'invention, chacun des axes de fourchettes 21 à 24 s'étend suivant une génératrice d'un cylindre de révolution C (figure 3), qui est axé sur l'axe longitudinal X.

La sélection d'un des organes menés 210, 220, ou 230 par l'organe menant 11, ou la sélection de l'organe mené 240 par l'organe menant 12, sont ainsi opérées par une rotation de l'arbre de commande 1 autour de l'axe longitudinal X, amenant l'organe menant adéquat en regard de l'organe mené sélectionné, pour assujettir cinématiquement cet organe mené sélectionné à l'organe menant actif.

Après sélection d'un organe mené, la translation de l'arbre de commande 1 le long de l'axe longitudinal X permet d'assurer une translation correspondante de l'organe mené sélectionné et de l'axe de fourchette qui le porte.

L'arbre de commande 1 est mobile en translation, le long de l'axe X, entre deux positions axiales actives, disposées de part et d'autre d'une position neutre, la première position axiale active étant obtenue par translation de l'arbre de commande suivant la première direction axiale D1, et la deuxième position axiale active étant obtenue par translation de l'arbre de commande suivant la seconde direction axiale D2.

Cet agencement, qui diffère de la disposition classique dans laquelle l'arbre de commande est transversal aux axes de fourchettes, permet d'augmenter considérablement la compacité du dispositif de commande.

Une autre originalité importante, bien qu'optionnelle, du dispositif de commande de l'invention réside dans un ensemble de moyens permettant d'assurer automatiquement la rotation de l'arbre de commande 1 autour de son axe X, en fonction de ses déplacements axiaux entre ses deux positions axiales actives.

Ces moyens sont prévus pour faire tourner l'arbre de commande 1 autour de son axe X dans le premier sens de rotation S1 (figure 3), qui fait passer cet arbre 1 d'une position angulaire de repos illustrée à la figure 3 à une première position angulaire extrême illustrée à la figure 9.

De préférence, ce dispositif comprend un ressort 6, qui sollicite en permanence l'arbre de commande 1 en rotation dans le second sens de rotation S2 autour de l'axe longitudinal X.

D'autre part, la position angulaire de repos de l'arbre de commande 1 est déterminée par le contact mutuel d'une butée 100 portée par l'arbre de commande 1, et d'un organe d'indexage 5 relié au carter 7 dans lequel sont logés l'arbre de commande 1 et les axes de fourchettes 21 à 24, ce carter étant fixe par rapport à l'axe longitudinal X.

Pour assurer la rotation de l'arbre de commande 1 suivant le premier sens de rotation S1 en fonction de ses débattements axiaux, l'arbre de commande 1 comporte par exemple un ou plusieurs pions radiaux tels que 101 et 102, et le dispositif de commande comprend un ou plusieurs organes de guidage mobiles, tels que 3 et 4.

Chacun des organes de guidage 3 et 4 est monté radialement mobile par rapport à l'axe longitudinal X entre une position rapprochée et une position éloignée de l'arbre de commande 1 et porte une came dotée d'une rampe, le premier organe de guidage 3 portant ainsi la came 31 dotée de la rampe 310, comme illustré aux figures 12 et 13.

Le pion radial 101 de l'arbre de commande 1 est destiné à coopérer avec l'organe de guidage 3, tandis que le pion radial 102 de cet arbre est destiné à coopérer avec l'organe de guidage 4.

Lorsque l'un des organes de guidage 3 et 4 occupe sa position rapprochée, le pion radial correspondant 101 ou 102 est en contact de guidage avec lui, ce contact étant en revanche rompu lorsque l'organe de guidage occupe sa position éloignée.

Dans ces conditions, lorsque l'arbre de commande 1 est entraîné en translation suivant la première direction D1 le long de l'axe longitudinal X, et lorsque le premier organe de guidage 3 est en position rapprochée, le premier pion radial 101 est guidé sur la rampe 310 de la came 31, de sorte que l'arbre de commande 1 subit une rotation dans le premier sens S1 autour de l'axe longitudinal X, de sa position angulaire de repos jusque dans une première position angulaire décalée en direction de la première position angulaire extrême de l'arbre 1 et visible sur la figure 5.

Puis, lorsque l'arbre de commande 1 est entraîné en translation suivant la première direction D1 le long de l'axe longitudinal X alors qu'il se trouve dans sa première position angulaire décalée, et lorsque le second organe de guidage 4 est en position rapprochée, le deuxième pion radial 102 est guidé sur la rampe de la came de ce second organe de guidage 4, de sorte que l'arbre de commande 1 subit une rotation supplémentaire dans le premier sens S1 autour de l'axe longitudinal X, de sa première position angulaire décalée jusque dans une deuxième position angulaire décalée visible sur la figure 9.

Pour permettre une automatisation des mouvements de l'arbre de commande 1, ce dernier est par exemple constitué au moins en partie par un piston d'un vérin hydraulique.

De même, chacun des organes de guidage 3 et 4 peut être mû par un actionneur monté sur le carter 7 et avantageusement constitué par un électro-aimant tel que 83 et 84.

A cette fin, l'organe de guidage 3, illustré le mieux à la figure 12, comprend une platine 30 dans laquelle est découpée la came 31 terminée par la rampe 310, et qui supporte une tige d'actionnement 32 liée à l'électro-aimant 83, et un ergot anti-rotation 34 coopérant avec le carter 7 pour éviter toute rotation de la platine 30 autour de l'axe de la tige 32.

Si l'organe de guidage 3 est ainsi guidé de manière à n'effectuer qu'un mouvement de va-et-vient transversalement à l'axe longitudinal X, cet organe 3 comprend, en plus de la came 31 et de sa rampe 310, une glissière 33 qui est espacée de la came 31 et qui la recouvre de façon au moins partielle et dans certaines conditions.

Cette glissière 33 est montée basculante sur la platine 30 par rapport à la première came 31, par exemple autour d'un axe d'articulation 35, pour pouvoir se soulever et permettre au pion radial 101 d'échapper à la rampe 310 lorsque l'arbre de commande 1 se déplace suivant la première direction axiale D1, et pour offrir à ce pion radial 101 un appui de guidage lorsque l'arbre de commande 1 se déplace suivant la deuxième direction axiale D2.

De la même façon, l'organe de guidage 4 comprend, en plus de sa came et de la rampe associée, une glissière qui est montée sur l'organe de guidage 4 comme la glissière 33 est montée sur l'organe de guidage 3, et qui coopère avec le pion radial 102 comme la glissière 33 coopère avec le pion radial 101.

L'organe d'indexage 5 est mobile entre deux positions suivant une direction transversale par rapport à l'axe longitudinal X et par exemple mû par un actionneur commandé, tel qu'un électro-aimant 85 qui est monté sur le carter 7.

Dans la mesure où l'arbre de commande 1 est sollicité en permanence dans le sens de rotation S2 par le ressort 6, le déplacement de l'organe d'indexage 5 par l'électro-aimant 85 entraîne de déplacement de la butée 100 portée par l'arbre de commande 1.

L'arbre de commande peut ainsi être déplacé, par une rotation de sens S2, de sa position angulaire de repos visible à la figure 3, à une seconde position angulaire extrême visible à la figure 10, et inversement.

Comme le montre la figure 10, l'organe menant 12 porté par l'arbre de commande 1 coopère alors avec l'organe mené 240 de l'axe de fourchette 24, cet axe étant par exemple celui qui commande le rapport de marche arrière de la boîte de vitesses.

Le carter 7 dans lequel sont logés l'arbre de commande 1 et les axes de fourchettes 21 à 24 peut soit être le carter de la boîte de vitesses elle-même, soit être constitué par un carter séparé et extérieur à la boîte de vitesses.

Le fonctionnement du dispositif précédemment décrit est illustré de façon chronologique par les figures 1 à 11.

Sur la figure 1, aucun des électro-aimants 83 à 85 n'est alimenté, l'organe d'indexage 5 étant ainsi dans une position de repos.

Par l'effet du couple élastique de rotation appliqué par le ressort 6 sur l'arbre de commande 1, la butée 100 portée par l'arbre 1 est appuyée sur l'organe d'indexage 5, de sorte que l'arbre de commande 1 occupe lui-même sa position angulaire de repos, pour laquelle l'organe menant 11 est en prise avec l'organe mené 210 de l'axe de fourchette 21.

Sur la figure 1, l'arbre de commande 1 est par ailleurs représenté dans sa première position axiale active, c'est-à-dire dans une position axiale qui, par rapport à la position neutre de l'arbre 1, est avancée dans la première direction axiale D1.

Dans ces conditions, le rapport de vitesses engagé par l'axe de fourchette 21 est le premier rapport de la boîte de vitesses.

Sur la figure 2, l'arbre de commande 1 occupe toujours sa position angulaire de repos mais est représenté dans sa deuxième position axiale active, c'est-à-dire dans une position axiale qui, par rapport à la position neutre de l'arbre 1, est avancée dans la seconde direction axiale D2, inverse de la première direction axiale D1.

Dans ces conditions, le rapport de vitesses engagé par l'axe de fourchette 21 est le deuxième rapport de la boîte de vitesses.

Comme le montre par ailleurs la figure 2, l'arbre de commande 1 occupe alors une position pour laquelle le pion radial 101 est disposé radialement en regard de la came 31 de l'organe de guidage 3.

Une excitation de l'électro-aimant 83, qui a pour effet de rapprocher l'organe de guidage 3 de l'axe longitudinal X, permet ainsi d'engager le pion radial 101 dans la came 31 (figures 3 et 4).

Au début de la translation suivante de l'arbre de commande 1 dans la première direction axiale D1, le pion radial 101 parcourt la came 31 et gravit la rampe 310 en suivant le trajet K1 illustré à la figure 12, de sorte que l'arbre 1 subit autour de l'axe longitudinal X une rotation de sens S1 qui le place dans sa première position angulaire décalée.

Lors de cette rotation, l'organe menant 11 vient se mettre en prise avec l'organe mené 220 de l'axe de fourchette 22.

Puis l'arbre de commande 1 vient, à la fin de cette même translation, se placer dans sa première position axiale active en entraînant avec lui l'organe mené 220 de l'axe de fourchette 22, la position en résultant étant illustrée à la figure 5.

Le rapport de vitesses engagé par l'axe de fourchette 22 est alors le troisième rapport de la boîte de vitesses.

Sur la figure 6, l'arbre de commande 1 occupe toujours sa première position angulaire décalée mais est représenté dans sa deuxième position axiale active, c'est-à-dire dans une position axiale qui, par rapport à la position neutre de l'arbre 1, est avancée dans la seconde direction axiale D2.

Pour parvenir à cette position, l'arbre de commande 1 s'appuie sur l'organe de guidage 3 et notamment sur la glissière 33 par son pion radial 101, qui suit le trajet K2 illustré à la figure 12.

Le rapport de vitesses engagé par l'axe de fourchette 22 est alors le quatrième rapport de la boîte de vitesses.

Comme le montre la figure 6, l'arbre de commande 1 occupe à ce moment une position pour laquelle le pion radial 102 est disposé radialement en regard de la came 42 de l'organe de guidage 4.

Une excitation de l'électro-aimant 84, qui a pour effet de rapprocher l'organe de guidage 4 de l'axe longitudinal X, permet ainsi d'engager le pion radial 102 dans la came 42 (figure 7).

Au début de la translation suivante de l'arbre de commande 1 dans la première direction axiale D1, le pion radial 102 parcourt la came 42 et gravit la rampe 420, de sorte que l'arbre 1 subit autour de l'axe longitudinal X une rotation supplémentaire de sens S1 qui le place dans sa deuxième position angulaire décalée.

Lors de cette rotation, l'organe menant 11 vient se mettre en prise avec l'organe mené 230 de l'axe de fourchette 23.

Puis l'arbre de commande 1 vient, à la fin de cette même translation, se placer dans sa première position axiale active en entraînant avec lui l'organe mené 230 de l'axe de fourchette 23, la position en résultant étant illustrée aux figures 8 et 9.

Le rapport de vitesses engagé par l'axe de fourchette 23 est alors le cinquième rapport de la boîte de vitesses.

Une translation de l'arbre de commande 1 dans la seconde direction permet ensuite d'engager le sixième rapport de la boîte de vitesses, si cette boîte dispose d'un tel rapport.

Comme le montre la figure 9, les organes de guidage 3 et 4 peuvent occuper simultanément leur position rapprochée lorsque l'organe menant 11 de l'arbre de commande 1 est en prise avec l'organe mené 230 de l'axe de fourchette 23.

Néanmoins, les organes de guidage 3 et 4 peuvent être commandés indépendamment l'un de l'autre, le dispositif de commande permettant ainsi à volonté le passage d'un rapport de vitesse supérieur à un rapport de vitesse inférieur immédiatement voisin, non immédiatement voisin, ou éloigné.

Par exemple, à partir de la position illustrée à la figure 9, dans laquelle le cinquième rapport de vitesse est engagé, il est possible d'engager le quatrième rapport en ramenant l'arbre de commande 1 dans sa position axiale neutre, en ramenant l'organe de guidage 4 dans sa position éloignée pour dégager le pion radial 102, et en déplaçant l'arbre de commande 1 dans la deuxième direction axiale D2 dès que le pion radial 101 a pris appui, sous l'effet de la force de rappel du ressort 6, sur l'organe de guidage 3.

Cependant, il est également possible d'engager le troisième rapport en ramenant l'arbre de commande 1 dans sa position axiale neutre, en ramenant l'organe de guidage 4 dans sa position éloignée pour dégager le pion radial 102, et en déplaçant l'arbre de commande 1 dans la première direction axiale D1 dès que le pion radial 101 a pris appui, sous l'effet de la force de rappel du ressort 6, sur l'organe de guidage 3.

Il est encore possible d'engager le deuxième rapport en ramenant l'arbre de commande 1 dans sa position axiale neutre, en ramenant les organes de guidage 3 et 4 dans leur position éloignée pour dégager les pions radiaux 101 et 102, et en déplaçant l'arbre de commande 1 dans la deuxième direction axiale D2 dès que la butée 100 a pris appui, sous l'effet de la force de rappel du ressort 6, sur l'organe d'indexage 5.

Enfin, il est également possible d'engager le premier rapport en ramenant l'arbre de commande 1 dans sa position axiale neutre, en ramenant les organes de guidage 3 et 4 dans leur position éloignée pour dégager les pions radiaux 101 et 102, et en déplaçant l'arbre de commande 1 dans la première direction axiale D1 dès que la butée 100 a pris appui, sous l'effet de la force de rappel du ressort 6, sur l'organe d'indexage 5.

## Revendications

1. Dispositif de commande d'une boîte de vitesses susceptible d'offrir plusieurs rapports de vitesses incluant une marche arrière, ce dispositif comprenant un arbre de commande (1) allongé suivant un axe longitudinal (X), au moins un premier organe menant (11) porté par l'arbre de commande (1), une pluralité d'axes de fourchettes (21, 22, 23, 24), et une pluralité d'organes menés (210, 220, 230, 240) dont chacun est porté par un axe de fourchette, les axes de fourchettes (21, 22, 23, 24) s'étendant parallèlement les uns aux autres, et l'arbre de commande (1) étant mobile en translation entre au moins deux positions axiales, le long de l'axe longitudinal (X), suivant des première et seconde directions opposées (D1, D2), et mobile en rotation autour de l'axe longitudinal (X), dans des premier et second sens opposés (S1, S2), au moins entre une position angulaire de repos et une première position angulaire extrême, et le premier organe menant (11) coopérant sélectivement avec un organe mené, sélectionné dans la pluralité d'organes menés (210, 220, 230, 240), pour lier cinématiquement à l'arbre de commande (1) l'organe mené sélectionné et l'axe de fourchette qui le porte, **caractérisé en ce que** chacun des axes de fourchettes (21, 22, 23, 24) s'étend suivant une génératrice d'un cylindre de révolution (C) axé sur l'axe longitudinal (X) de l'arbre de commande (1), **en ce que** l'organe mené sélectionné est cinématiquement assujetti au premier organe menant (11) au moins par rotation de l'arbre de commande (1) autour de l'axe longitudinal (X), et sélectivement entraîné en translation le long de l'axe longitudinal (X) par translation de l'arbre de commande (1), et **en ce qu'**il comprend au moins un premier organe de guidage (3) portant une première came (31) à rampe (310) et monté radialement mobile par rapport à l'axe longitudinal (X) entre une position rapprochée et une position éloignée de l'arbre de commande (1), **en ce que** l'arbre de commande (1) comporte au moins un premier pion radial (101) respectivement en contact et sans contact avec le premier organe de guidage (3) pour les positions rapprochée et éloignée de ce dernier, et **en ce que** l'arbre de commande (1) est sélectivement entraîné en rotation dans le premier sens (S1) autour de l'axe longitudinal (X), de sa position angulaire de repos jusque dans une première position angulaire décalée vers sa première position angulaire extrême, par entraînement de cet arbre (1) en translation suivant la première direction (D1) le long de cet axe longitudinal (X), et par guidage du premier pion radial (101) sur la rampe (310) de la première came (31), en position rapprochée du premier organe de guidage (3).

2. Dispositif de commande suivant la revendication 1, **caractérisé en ce qu'**il comprend un ressort (6) sollicitant l'arbre de commande (1) en rotation dans le second sens de rotation (S2) autour de l'axe longitudinal (X), **en ce que** l'arbre de commande (1) porte une butée (100), et **en ce que** la position angulaire de repos de l'arbre de commande (1) est déterminée par un contact mutuel de la butée (100) portée par l'arbre de commande (1) et d'un organe d'indexage (5).

3. Dispositif de commande suivant la revendication 1 ou 2, **caractérisé en ce que** le premier organe de guidage (3) comprend, en plus de la première came (31) à rampe (310), une première glissière (33) espacée de la première came (31) et la recouvrant de façon au moins partielle et sélective, et **en ce que** la première glissière (33) est montée basculante par rapport à la première came (31) pour permettre au premier pion radial (101) d'échapper à la rampe (310) de la première came (31) pour une translation de l'arbre de commande (1) suivant la première direction (D1), et pour offrir au premier pion radial (101) un appui de guidage pour une translation de l'arbre de commande (1) suivant la seconde direction (D2).

4. Dispositif de commande suivant l'une quelconque des revendications précédentes combinée à la revendication 2, **caractérisé en ce qu'**il comprend au moins un deuxième organe de guidage (4) portant une deuxième came à rampe et monté radialement mobile par rapport à l'axe longitudinal (X) entre une position rapprochée et une position éloignée de l'arbre de commande (1), **en ce que** l'arbre de commande (1) comporte au moins un deuxième pion radial (102) respectivement en contact et sans contact avec le deuxième organe de guidage (4) pour les positions rapprochée et éloignée de ce dernier, et **en ce que** l'arbre de commande (1) est sélectivement entraîné en rotation dans le premier sens (S1) autour de l'axe longitudinal (X), de sa première position angulaire décalée jusque dans une deuxième position angulaire décalée, par entraînement de cet arbre (1) en translation suivant la première direction (D1) le long de cet axe longitudinal (X), et par guidage du deuxième pion radial (102) sur la rampe de la deuxième came, en position rapprochée du deuxième organe de guidage (4).

5. Dispositif de commande suivant la revendication 4, **caractérisé en ce que** le deuxième organe de guidage (4) comprend, en plus de la deuxième came à rampe, une deuxième glissière espacée de la deuxième came et la recouvrant de façon au moins partielle et sélective, et **en ce que** la deuxième glissière est montée basculante par rapport à la deuxième came pour permettre au deuxième pion radial (102) d'échapper à la rampe de la deuxième came pour une translation de l'arbre de commande (1) suivant la première direction (D1), et pour offrir au deuxième pion radial (102) un appui de guidage pour une translation de l'arbre de commande (1) suivant la seconde direction (D2).

6. Dispositif de commande suivant l'une quelconque des revendications précédentes, **caractérisé en ce qu'**il comprend un carter (7) fixe par rapport à l'axe longitudinal (X) et dans lequel sont logés l'arbre de commande (1) et les axes de fourchettes (21, 22, 23, 24).

7. Dispositif de commande suivant la revendication 6, **caractérisé en ce que** le carter (7) constitue une enveloppe pour la boîte de vitesses.

8. Dispositif de commande suivant l'une quelconque des revendications précédentes combinée à la revendication 3, **caractérisé en ce que** l'organe d'indexage (5) est mobile suivant une direction transversale par rapport à l'axe longitudinal (X) et **en ce que** l'arbre de commande (1) est sélectivement déplacé, par l'organe d'indexage (5) agissant sur la butée (100), entre sa position angulaire de repos et une seconde position angulaire extrême séparée de la première position angulaire extrême par la position angulaire de repos.

9. Dispositif de commande suivant la revendication 8, **caractérisé en ce que** l'arbre de commande (1) porte un second organe menant (12) coopérant, dans la seconde position angulaire extrême de cet arbre (1), avec un organe mené (240) d'un axe de fourchette (24) commandant la marche arrière.

10. Dispositif de commande suivant l'une quelconque des revendications précédentes combinée aux revendications 2 et 7, **caractérisé en ce qu'**il comprend au moins un actionneur commandé (83, 84, 85), tel qu'un électro-aimant, monté sur le carter (7) et imprimant sélectivement à un organe mobile (3, 4, 5) du dispositif un mouvement de va-et-vient transversalement à l'axe longitudinal (X).

11. Dispositif de commande suivant l'une quelconque des revendications précédentes, **caractérisé en ce que** l'arbre de commande (1) est au moins partiellement constitué par un piston d'un vérin hydraulique.

## Patentansprüche

1. Vorrichtung zum Schalten eines Schaltgetriebes, das mehrere Gänge, einschließlich Rückwärtsgang, ermöglichen kann, wobei diese Vorrichtung eine entlang einer Längsachse (X) verlaufende Schaltwelle (1), zumindest ein von der Schaltwelle (1) getragenes erstes Antriebsorgan (11), eine Mehrzahl von Schaltgabelstangen (21, 22, 23, 24) und eine Mehrzahl von Abtriebsorganen (210, 220, 230, 240) enthält, die jeweils von einer Schaltgabelstange getragen werden, wobei die Schaltgabelstangen (21, 22, 23, 24) sich parallel zueinander erstrecken und wobei die Schaltwelle (1) zwischen zumindest zwei axialen Stellung entlang der Längsachse (X) in einer ersten und einer dazu entgegengesetzten zweiten Verschieberichtung (D1, D2) translatorisch verschiebbar ist und um die Längsachse (X) herum in einer ersten und einer dazu entgegengesetzten zweiten Drehrichtung (S1, S2) zumindest zwischen einer Ruhewinkelstellung und einer ersten Endwinkeistellung drehbar ist, und wobei das erste Antriebsorgan (11) selektiv mit einem Abtriebsorgan zusammenwirkt, das aus der Mehrzahl von Abtriebsorganen (210, 220, 230, 240) ausgewählt ist, um das ausgewählte Abtriebsorgan und die dieses tragende Schaltgabelstange kinematisch mit der Schaltwelle (1) zu verbinden, **dadurch gekennzeichnet, dass** jede der Schaltgabelstangen (21, 22, 23, 24) entlang einer Mantellinie eines Rotationszylinders (C) verläuft, der auf die Längsachse (X) der Schaltwelle (1) zentriert ist, und dass das ausgewählte Abtriebsorgan dem ersten Antriebsorgan (11) zumindest durch Drehung der Schaltwelle (1) um die Längsachse (X) kinematisch unterworfen ist und selektiv entlang der Längsachse (X) durch Verschiebung der Schaltwelle (1) translatorisch angetrieben wird, und dass sie zumindest ein erstes Führungsorgan (3) enthält, das eine erste Kurve (31) mit einer Rampe (310) trägt und bezüglich der Längsachse (X) zwischen einer der Schaltwelle (1) angenäherten Stellung und einer von dieser entfernten Stellung radial verstellbar gelagert ist, dass die Schaltwelle (1) zumindest einen ersten radialen Zapfen (101) enthält, der mit dem ersten Führungsorgan (3) in Kontakt steht bzw. keinen Kontakt mit diesem hat, wenn es sich in der angenäherten bzw. entfernten Stellung befindet, und dass die Schaltwelle (1) in der ersten Drehrichtung (S1) um die Längsachse (X) aus ihrer Ruhewinkelstellung bis in eine erste Winkelstellung selektiv drehend angetrieben wird, die zu ihrer ersten Endwinkeistellung hin versetzt ist, und zwar durch translatorisches Antreiben dieser Welle (1) in der ersten Verschieberichtung (D1) entlang dieser Längsachse (X) und durch Führen des ersten radialen Zapfens (101) an der Rampe (310) der ersten Kurve (31) in der angenäherten Stellung des ersten Führungsorgans (3).

2. Schaltvorrichtung nach Anspruch 1, **dadurch gekennzeichnet, dass** sie eine Feder (6) enthält, welche die Schaltwelle (1) in der zweiten Drehrichtung (S2) um die Längsachse (X) drehend beaufschlagt, dass die Schaltwelle (1) einen Anschlag (100) enthält und dass die Ruhewinkeistellung der Schaltwelle (1) von einem gegenseitigen Kontakt des von der Schaltwelle (1) getragenen Anschlags (100) mit einem Indexierungsorgan (5) bestimmt wird.

3. Schaltvorrichtung nach Anspruch 1 oder 2, **dadurch gekennzeichnet, dass** das erste Führungsorgan (3) neben der ersten Kurve (31) mit einer Rampe (310) eine erste Gleitführung (33) enthält, die von der ersten Kurve (31) beabstandet ist und diese zumindest teilweise und selektiv überdeckt, und dass die erste Gleitführung (33) bezüglich der ersten Kurve (31) verschwenkbar gelagert ist, um dem ersten radialen Zapfen (101) zu gestatten, für eine Verschiebung der Schaltwelle (1) in der ersten Verschieberichtung (D1) der Rampe (310) der ersten Kurve (31) zu entweichen, und um dem ersten radialen Zapfen (101) für eine Verschiebung der Schaltwelle (1) in der zweiten Verschieberichtung (D2) eine Führungsabstützung zu bieten.

4. Schaltvorrichtung nach einem der vorangehenden Ansprüche in Kombination mit Anspruch 2, **dadurch gekennzeichnet, dass** sie zumindest ein zweites Führungsorgan (4) enthält, das eine zweite Kurve mit Rampe trägt und bezüglich der Längsachse (X) zwischen einer der Schaltwelle (1) angenäherten Stellung und einer von dieser entfernten Stellung radial verstellbar gelagert ist, dass die Schaltwelle (1) zumindest einen zweiten radialen Zapfen (102) enthält, der mit dem zweiten Führungsorgan (4) in Kontakt steht bzw. keinen Kontakt mit diesem hat, wenn es sich in der angenäherten bzw. entfernten Stellung befindet, und dass die Schaltwelle (1) in der ersten Drehrichtung (S1) um die Längsachse (X) aus ihrer ersten versetzten Winkelstellung bis in eine zweite versetzte Winkelstellung selektiv drehend angetrieben wird, und zwar durch translatorisches Antreiben dieser Welle (1) in der ersten Verschieberichtung (D1) entlang dieser Längsachse (X) und durch Führen des zweiten radialen Zapfens (102) an der Rampe der zweiten Kurve in der angenäherten Stellung des zweiten Führungsorgans (4).

5. Schaltvorrichtung nach Anspruch 4, **dadurch gekennzeichnet, dass** das zweite Führungsorgan (4) neben der zweiten Kurve mit Rampe eine zweite Gleitführung enthält, die von der zweiten Kurve beabstandet ist und diese zumindest teilweise und selektiv überdeckt, und dass die zweite Gleitführung bezüglich der zweiten Kurve verschwenkbar gelagert ist, um dem zweiten radialen Zapfen (102) zu gestatten, für eine Verschiebung der Schaltwelle (1) in der ersten Verschieberichtung (D1) der Rampe der zweiten Kurve zu entweichen, und um dem zweiten radialen Zapfen (102) für eine Verschiebung der Schaltwelle (1) in der zweiten Verschieberichtung (D2) eine Führungsabstützung zu bieten.

6. Schaltvorrichtung nach einem der vorangehenden Ansprüche, **dadurch gekennzeichnet, dass** sie ein Gehäuse (7) enthält, das zur Längsachse (X) fest ist und in dem die Schaltwelle (1) und die Schaltgabelstangen (21, 22, 23, 24) aufgenommen sind.

7. Schaltvorrichtung nach Anspruch 6, **dadurch gekennzeichnet, dass** das Gehäuse (7) eine Hülle für das Schaltgetriebe bildet.

8. Schaltvorrichtung nach einem der vorangehenden Ansprüche in Kombination mit Anspruch 3, **dadurch gekennzeichnet, dass** das Indexierungsorgan (5) in einer Richtung quer zur Längsachse (X) verstellbar ist und dass die Schaltwelle (1) zwischen seiner Ruhewinkelstellung und einer zweiten Endwinkelstellung, die von der ersten Endwinkelstellung durch die Ruhewinkeistellung getrennt ist, durch das Indexierungsorgan (5) selektiv verstellt wird, das auf den Anschlag (100) einwirkt.

9. Schaltvorrichtung nach Anspruch 8, **dadurch gekennzeichnet, dass** die Schaltwelle (1) ein zweites Antriebsorgan (12) trägt, das in der zweiten Endwinkelstellung dieser Welle (1) mit einem Abtriebsorgan (240) einer den Rückwärtsgang steuernden Schaltgabelstange (24) zusammenwirkt.

10. Schaltvorrichtung nach einem der vorangehenden Ansprüche in Kombination mit Anspruch 2 und 7, **dadurch gekennzeichnet, dass** sie zumindest einen steuerbaren Aktuator (83, 84, 85) enthält, wie etwa einen Elektromagneten, der an dem Gehäuse (7) angebracht ist und einem verstellbaren Organ (3, 4, 5) der Vorrichtung selektiv eine Hin- und Herbewegung quer zur Längsachse (X) aufprägt.

11. Schaltvorrichtung nach einem der vorangehenden Ansprüche, **dadurch gekennzeichnet, dass** die Schaltwelle (1) zumindest teilweise aus einem Kolben eines Hydraulikzylinders besteht.

## Claims

1. Transmission control device capable of offering a plurality of gear ratios including a reverse gear, said device comprising an elongate control shaft (1) disposed on a longitudinal axis (X), at least one first drive element (11) carried by the control shaft (1), a plurality of selector fork spindles (21, 22, 23, 24) and a plurality of driven elements (210, 220, 230, 240), each of which is carried by a selector fork spindle, the selector fork spindles (21, 22, 23, 24) extending parallel to one another, and the control shaft (1) being movable in translation between at least two axial positions along the longitudinal axis (X) in first and second opposed directions (D1, D2), and being movable in rotation about the longitudinal axis (X) in first and second opposed directions (S1, S2) at least between an angular rest position and a first angular end position, and the first driving element (11) cooperating selectively with a driven element selected from the plurality of driven elements (210, 220, 230, 240,) to connect kinematically the selected driven element and the selector fork spindle carrying same to the control shaft (1), **characterised in that** each of the selector fork spindles (21, 22, 23, 24) extends along a generating line of a cylinder of revolution (C) centred on the longitudinal axis (X) of the control shaft (1), **in that** the selected driven element is connected kinematically to at least the first driving element (11) by rotation of the control shaft (1) about the longitudinal axis (X) and is selectively driven in translation along the longitudinal axis (X) by translation of the control shaft (1), **in that** it includes at least a first guide element (3) carrying a first cam (31) having a ramp (310) and mounted radially movable with respect to the longitudinal axis (X) between a position proximate to and a position spaced from the control shaft (1), **in that** the control shaft (1) includes at least a first radial peg (101) respectively in contact with and without contact with the first guide element (3) for the positions proximate to and spaced from the latter, and **in that** the control shaft (1) is selectively driven in rotation in the first direction (S1) about the longitudinal axis (X) from its angular rest position to a first angular position offset towards its first angular end position by driving of said shaft (1) in translation in the first direction (D1) along said longitudinal axis (X), and by guidance of the first radial peg (101) on the ramp (310) of the first cam (31) in the position proximate to the first guide element (3).

2. Control device according to claim 1, **characterised in that** it includes a spring (6) urging the control shaft (1) in rotation in the second direction of rotation (S2) about the longitudinal axis (X), **in that** the control shaft (1) carries a stop (100), and **in that** the angular rest position of the control shaft (1) is determined by mutual contact between the stop (100) carried by the control shaft (1) and an indexing element (5).

3. Control device according to claim 1 or 2, **characterised in that** the first guide element (3) includes, in addition to the first cam (31) having the ramp (310), a first slide rail (33) spaced from the first cam (31) and covering it at least partially and selectively, and **in that** the first slide rail (33) is mounted tiltably with respect to the first cam (31) to permit the first radial peg (101) to escape from the ramp (310) of the first cam (31) for translation of the control shaft (1) in the first direction (D1), and to provide guidance support to the first radial peg (101) for translation of the control shaft (1) in the second direction (D2).

4. Control device according to any one of the preceding claims combined with claim 2, **characterised in that** it includes at least at least a second guide element (4) carrying a second cam having a ramp and mounted radially movable with respect to the longitudinal axis (X) between a position proximate to and a position spaced from the control shaft (1), **in that** the control shaft (1) includes at least a second radial peg (102) respectively in contact with and without contact with the second guide element (4) for the proximate and spaced positions of the latter, and **in that** the control shaft (1) is driven selectively in rotation in a first direction (S1) about the longitudinal axis (X) from its first offset angular position to a second offset angular position by entrainment of said shaft (1) in translation in the first direction (D1) along said longitudinal axis (X), and through guidance of the second radial peg (102) on the ramp of the second cam to a position proximate to the second guide element (4).

5. Control device according to claim 4, **characterised in that** the second guide element (4) includes, in addition to the second cam having a ramp, a second slide rail spaced from the first cam and covering it at least partially and selectively, and **in that** the second slide rail is mounted tiltably with respect to the second cam to permit the second radial peg (102) to escape from the ramp of the second cam for translation of the control shaft (1) in the first direction (D1), and to provide guidance support to the second radial peg (102) for translation of the control shaft (1) in the second direction (D2).

6. Control device according to any one of the preceding claims, **characterised in that** it includes a housing (7) that is fixed with respect to the longitudinal axis (X) and in which the control shaft (1) and the selector fork spindles (21, 22, 23, 24) are housed.

7. Control device according to claim 6, **characterised in that** the housing (7) constitutes a casing for the transmission.

8. Control device according to any one of the preceding claims combined with claim 3, **characterised in that** the indexing element (5) is movable in a transverse direction with respect to the longitudinal axis (X) and **in that** the control shaft (1) is selectively displaced by the indexing element (5) acting on the stop (100) between its angular rest position and a second angular end position separated from the first angular end position by the angular rest position.

9. Control device according to claim 8, **characterised in that** the control shaft (1) carries a second drive element (12) cooperating, in the second angular end position of said shaft (1), with a driven element (240) of a selector fork spindle (24) actuating reverse gear.

10. Control device according to any one of the preceding claims combined with claims 2 and 7, **characterised in that** it includes at least one controlled actuator (83, 84, 85), such as an solenoid, mounted on the housing (7) and selectively imparting to a movable element (3, 4, 5) of the device a forward and backward movement transversely to the longitudinal axis (X).

11. Control device according to any one of the preceding claims, **characterised in that** the control shaft (1) is at least partially constituted by a piston of a hydraulic jack.
